# EUROPÄISCHE PATENTANMELDUNG

(11) **EP 2 620 321 A2**
(43) Veröffentlichungstag der Anmeldung: **31.07.2013**
(21) Anmeldenummer: 13151983.7
(22) Anmeldetag: 21.01.2013
(51) Int. Cl.: B60N 3/00, B60R 11/02, B60R 11/00

(54) **Klapptisch**

(30) Priorität: 25.01.2012 DE 202012100251 U
(71) Anmelder: CRD Car Research & Development GmbH & Co. KG, 46240 Bottrop (DE)
(72) Erfinder: Buschmann, Bodo, 46236 Bottrop (DE)
(74) Vertreter: Stenger, Watzke & Ring

(57) **Zusammenfassung**

Die Erfindung betrifft einen Klapptisch zur verstellbaren Anordnung in einem Fahrzeug, insbesondere an einer Rückenlehne eines Fahrzeugsitzes, mit einer, eine Oberfläche aufweisende Tischplatte, die zwischen zwei Endstellungen verstellbar ist, wobei die Tischplatte in einer ersten Endstellung derart angeordnet ist, dass die Tischplatte bestimmungsgemäß, beispielsweise zur Aufnahme von Gegenständen nutzbar ist, wobei die Tischplatte (8) in einer Ebene im Wesentlichen parallel zur Oberfläche zumindest über einen Teilbereich in zwei relativ zueinander um eine Schwenkachse bewegbare Plattenelemente (9, 10) unterteilt ist, wobei die Plattenelemente (9, 10) Aufnahmen für eine Steuerungseinrichtung einerseits und eine mit der Steuerungseinrichtung in Kommunikationsverbindung bringbare Anzeigevorrichtung andererseits aufweisen.

## Beschreibung

Die Erfindung betrifft einen Klapptisch zur verstellbaren Anordnung in einem Fahrzeug, insbesondere an einer Rückenlehne eines Fahrzeugsitzes, mit einer, eine Oberfläche aufweisenden Tischplatte, die zwischen zwei Endstellungen verstellbar ist, wobei die Tischplatte in einer ersten Endstellung derart angeordnet ist, dass die Tischplatte bestimmungsgemäß, beispielsweise zur Aufnahme von Gegenständen nutzbar ist. Die Erfindung betrifft ferner einen Fahrzeugsitz mit einer Rückenlehne, die eine Rückseite aufweist, wobei im Bereich der Rückseite der Rückenlehne ein Klapptisch angeordnet ist.

Aus dem Stand der Technik sind verschiedene Klapptische und Fahrzeugsitze mit Klapptischen bekannt. Im Bereich der Personenkraftfahrzeuge werden derartige Klapptische insbesondere bei Fahrzeugen des höheren Preissegments angeboten, bei denen oftmals auf Chauffeurdienste zurückgegriffen wird, so dass eine chauffierte Person im Fondbereich eines solchen Personenkraftfahrtzeuges eine Tischfläche zur Verfügung hat, die beispielsweise als Abstellgelegenheit für Getränkebehälter, aber auch im zunehmenden Maße für Anordnungen von transportablen Microcomputern dient. Desweiteren sind derartige Klapptische aus Flugzeugen bekannt, wobei hier identische Zweckbestimmungen wie zuvor stehend beschrieben vorgesehen sind. Derartige in Flugzeugen verwendete Klapptische sind hinsichtlich ihrer Konstruktion relativ einfach ausgebildet und weisen lediglich eine an zwei Kragarmen schwenkbeweglich angelenkte Tischplatte aus Kunststoff auf, wobei üblicherweise eine Vertiefung zur sicheren Aufnahme eines Flüssigkeitsbehälters, beispielsweise eines Glases, einer Flasche oder einer Dose vorgesehen ist.

Ein konstruktiv aufwendiger Klapptisch ist aus der DE 299 08 621 U1 bekannt. Diese Druckschrift beschreibt einen Klapptisch, der verstellbar in einem Fahrzeug angebracht ist. Der Klapptisch weist eine Tischplatte auf, die in ihrem Lagerbereich klappbar gelagert und mit ihrem Lagerbereich verschiebbar ist, wobei zwei in Verschiebrichtung nebeneinander liegende Führungsbahnen zum Verschieben des Lagerbereichs der Tischplatte vorhanden sind. Ein erstes und ein zweites Kopplungsglied ist am Lagerbereich befestigt, wobei das erste Kopplungsglied in die erste und das zweite Kopplungsglied in die zweite Führungsbahn eingreifen. In beiden Kopplungsgliedern ist der jeweilige Lagerbereich der Tischplatte drehbar befestigt. Die beiden unteren Endbereiche der beiden Führungsbahnen, in denen sich die Kopplungsglieder im eingeklappten Zustand der Tischplatte befinden, sind leicht aufeinander zugebogen. Die beiden oberen, anderen Endbereiche der beiden Führungsbahnen, in denen sich die Kopplungsglieder im maximal ausgeklappten Zustand der Tischplatte befinden sind in Ausklapp-Richtung gebogen.

Dieser vorbekannte Klapptisch ist zweiteilig aufgebaut und weist eine untere Tischplatte und einen oberen Tischteil auf, wobei das Tischteil sich in Richtung parallel zur Tischplatte hin- und herschieben lässt. Ferner ist in der Tischplatte ein Ablagefach, beispielsweise zur Aufnahme von Schreibutensilien oder dergleichen vorgesehen.

Grundsätzlich ist dieser vorbekannte Klapptisch im Fahrzeugbereich für einfachste Anwendungen, wie beispielsweise das Abstellen von Getränkebehältern, wie Gläsern und das beschriften von Papier geeignet. Für höherwertige Anwendungen ist dieser Klapptisch jedoch nicht geeignet. Insbesondere für die Verwendung im Zusammenhang mit transportablen Microcomputern erscheint dieser vorbekannte Klapptisch ungeeignet.

Ausgehend von diesem Stand der Technik liegt der Erfindung die **Aufgabe** zugrunde, einen gattungsgemäßen Klapptisch derart weiterzubilden, dass er einerseits multifunktional auch im Hinblick auf die Verwendung von tragbaren Rechnersystemen geeignet ist und darüber hinaus eine geschützte und gegebenenfalls auch diebstahlverhindernde Anordnung eines derartigen Microrechners aus dem Fahrzeug heraus ermöglicht.

Die **Lösung** dieser Aufgabenstellung sieht vor, dass die Tischplatte in einer Ebene im Wesentlichen parallel zur Oberfläche zumindest über einen Teilbereich in zwei relativ zueinander um eine Schwenkachse bewegbare Plattenelemente unterteilt ist, wobei die Plattenelemente Aufnahmen für eine Steuerungseinrichtung einerseits und eine mit der Steuerungseinrichtung in Kommunikationsverbindung bringbare Anzeigevorrichtung andererseits aufweisen.

Die erfindungsgemäße Vorrichtung zeichnet sich somit dadurch aus, dass durch die Zweiteilung der Tischplatte nicht nur eine Abstellfläche vorgesehen ist, sondern dass auch ein Volumen entsteht, in dem eine Steuerungseinrichtung und eine Anzeigevorrichtung untergebracht werden können, die nach Überführung der beiden Plattenelemente in eine Endstellung handhabbar sind. Darüber hinaus bietet die erfindungsgemäße Vorrichtung den Vorteil, dass der Klapptisch auch in üblicherweise, das heißt bei nicht voneinander weggeschwenkten Plattenelementen als Abstellfläche oder Schreibfläche verwendbar ist. Die innerhalb des Klapptisches angeordnete Steuerungseinrichtung und Anzeigevorrichtung ist in dieser Position gegen Einflussnahmen und Beschädigungen geschützt.

Nach einer Weiterbildung der Erfindung ist vorgesehen, dass die Tischplatte elektromotorisch zwischen den beiden Endstellungen verstellbar ist. Diese Ausgestaltung dient insbesondere der vereinfachten Betätigung des Klapptisches und verhindert auf diese Weise eine Fehlbetätigung, da die elektromotorische Betätigung über einen beispielsweise im Kraftfahrzeug installierten Schalter eingeleitet werden kann, so dass ein vorgesehener Bewegungsweg mit bestimmungsgemäßer Bewegungsgeschwindigkeit überfahren wird. Es wird auf diese Weise eine bei händischer Betätigung beispielsweise zu große Betätigungsgeschwindigkeit und damit verbundene Beschädigung vermieden.

Neben der Tischplatte können auch die beiden Plattenelemente elektromotorisch zueinander bewegbar ausgebildet sein. Auch mit dieser Ausgestaltung werden die voranstehend genannten Vorteile erzielt, nämlich eine unsachgemäße händische Handhabung zu vermeiden und die Beschädigungen der miteinander gelenkig verbundenen Konstruktionselemente zu vermeiden.

Darüber hinaus ergibt sich ein weiteres Merkmal der Erfindung im Zusammenhang mit der voranstehend dargestellten elektromotorischen Betätigung dahingehend, dass die Bewegung der Tischplatte zwischen den beiden Endstellungen und der beiden Plattenelemente relativ zueinander abhängig voneinander ausführbar sind. Hier kann beispielsweise vorgesehen sein, dass sowohl die Tischplatte als auch die Plattenelemente in ihrer Bewegung über einen einzigen Schalter bedienbar sind. Durch diese Ausgestaltung wird sichergestellt, dass beispielsweise die Plattenelemente erst dann relativ zueinander bewegt werden, wenn die Tischplatte diesbezüglich in eine dafür vorgesehene Position verfahren ist. Eine frühzeitige Bewegung der Plattenelemente und damit verbundene Beschädigungen werden vermieden.

Vorzugsweise ist die Anzeigevorrichtung als Bildschirm, insbesondere mit integriertem Microcomputer ausgebildet. Als besonders geeignet haben sich hier sogenannte Tablet-PCs. Derartige Kombinationen aus Bildschirm und Microcomputer weisen beispielsweise die Möglichkeit der Bedienung über den berührungsempfindlichen Bildschirm und/oder eine damit verbundene Tastatur auf. Ferner sind derartige Kombinationen aus Bildschirmen und Microcomputern sehr kleinbauend ausgebildet, so dass sie sich für die Integration in ein Plattenelement eignen.

Als Steuerungseinrichtung ist vorzugsweise eine Tastatur vorgesehen, die beispielsweise drahtlos mit dem Bildschirm bzw. dem integrierten Computer kommuniziert. Grundsätzlich besteht aber auch die Möglichkeit, dass der Microcomputer in einem Fahrzeug an zentraler Stelle, beispielsweise in einem Gepäckabteil oder unter einem Fahrzeugsitz angeordnet und in Kommunikationsverbindung mit dem Bildschirm verbunden ist. In diesem Fall wird die Tastatur bevorzugt drahtlos mit einer solchen zentralen Rechnereinheit verbunden.

Bevorzugt ist die Tastatur dann in ein Plattenelement derart eingelegt, dass sie bei Bedarf von der benutzenden Person herausgenommen werden kann. Dies führt dann beispielsweise zu einer entspannten Sitzhaltung im Fahrzeug, wobei die Tastatur in einer für den Nutzer angenehmen Position angeordnet wird. Beispielsweise kann eine solche Position durch eine Ablage der Tastatur auf den Oberschenkeln des Nutzers erreicht werden. Es besteht aber auch die Möglichkeit, dass beispielsweise ein nicht unmittelbar vor der Anzeigevorrichtung sitzender Mitfahrer die Tastatur übernimmt und damit die Anzeigevorrichtung steuert.

Es versteht sich von selbst, dass die Anzeigevorrichtung mit weiteren Datenträgern, wie beispielsweise DVD-Laufwerken, Spielekonsolen oder dergleichen verbindbar ist, so dass auch auf darauf gespeicherte Daten zugegriffen werden kann.

Vorzugsweise weist das Plattenelement zur Aufnahme der Anzeigevorrichtung eine Ausnehmung auf, in die die Anzeigevorrichtung lagefixiert einsetzbar ist. Hierbei hat es sich als vorteilhaft erwiesen, die Ausnehmung taschenförmig auszubilden, wobei die Anzeigevorrichtung seitlich in Horizontalrichtung in die Ausnehmung einschiebbar ist. Durch die Lagefixierung besteht beispielsweise die Möglichkeit in der Ausnehmung elektrische Anschlüsse zur Versorgung der Anzeigevorrichtung mit elektrischer Energie und/oder Daten auszubilden, so dass die Anzeigevorrichtung bei ordnungsgemäßer Anordnung in der Aufnahme mit Energie und/oder Daten versorgt wird. Ein in der Anzeigevorrichtung vorhandener Akkumulator wird bei in der Ausnehmung angeordneter Anzeigevorrichtung automatisch aufgeladen. Somit kann die Anzeigevorrichtung jederzeit aus der Ausnehmung herausgenommen werden, um die Anzeigevorrichtung und den integrierten Microcomputer auch außerhalb des Fahrzeuges nutzen zu können.

Nach einem weiteren Merkmal der Erfindung ist vorgesehen, dass die Tischplatte mit zwei Kragarmen ausgebildet ist, die entlang von zwei Führungsschienen zwischen den Endstellungen verfahrbar sind. Vorzugsweise sind die Kragarme an Seitenflächen der Tischplatte angeordnet, so dass die Tischplatte zwischen den Kragarmen eingespannt ist. Es besteht aber auch die Möglichkeit, dass die Kragarme an einer der Oberfläche gegenüberliegenden Unterseite der Tischplatte angeordnet sind.

Die Kragarme sind in Führungsschienen geführt, die entsprechend der vorgesehenen Bewegung der Tischplatte ausgebildet sind. In einer ersten Endstellung verlaufen die Kragarme parallel zu den Führungsschienen, während die Kragarme in einer zweiten Endstellung, welche mit der nutzbaren Endstellung des Klapptisches übereinstimmt im Wesentlichen rechtwinklig zur Längserstreckung der Führungsschienen ausgerichtet sind.

Die Tischplatte kann gemäß einem weiteren Merkmal der Erfindung relativ zu den Kragarmen bewegbar ausgebildet sein, das heißt in Längsachsenrichtung der Kragarme verschiebbar sein. Hierdurch kann die Tischplatte näher an Nutzer überführt werden. Die Endstellungen dieser Bewegungen können durch Rastelemente festgelegt werden, so dass durch Fahrzeugbewegungen ein unerwünschtes Verschieben der Tischplatte relativ zu den Kragarmen ausgeschlossen wird.

Vorzugsweise ist die Tischplatte mit einer Verbindungsvorrichtung zur Verbindung mit einer Rückenlehnen eines Sitzes ausgebildet, die aus zwei beidseitig der Tischplatte angeordneten und mit der Tischplatte verbundenen, jeweils in einer Führungsschiene geführten und entlang der Führungsschienen verfahrbaren Kragarmen besteht, wobei die Verbindungsvorrichtung zumindest einen Haltearm aufweist, der schwenkbeweglich an einer Führungsschiene und einem Kragarm angelenkt sind. Diese Verbindungsvorrichtung eignet sich insbesondere für die Anordnung des Klapptisches im rückwertigen Bereich einer Rückenlehne eines Fahrzeugs, wobei es sich als vorteilhaft erwiesen hat, den Klapptisch in einer Ausnehmung der Rückenlehne derart anzuordnen, dass der Klapptisch in einem eingeklappten Zustand im Wesentlichen oberflächenbündig mit einer Aussenfläche der Rückenlehne abschließt. Hierdurch hervorstehende Kanten vermieden, die eine Verletzungsgefahr insbesondere beim Ein- und Aussteigen darstellen können. Die Verbindungsvorrichtung ermöglicht eine stabile Halterung des Klapptisches an dem Sitz, so dass ein Vielzahl von Tätigkeiten auf der Tischplatte ausgeführt werden können. Durch die Stabilität der Verbindungsvorrichtung ist auch die Aufnahme bzw. das Abstellen von Geräten und/oder Gegenständen höheren Gewichts möglich.

Eine Weiterbildung der Verbindungsvorrichtung sieht vor, dass der Haltearm im Wesentlichen L-förmig ausgebildet ist und zwei Schenkel aufweist, die mit ihren freien Enden an Zapfen in der Führungsschiene und am Kragarm angeschlossen sind. Derart ausgebildet wird die Gewichtskraft der Tischplatte und der darin aufgenommenen und/oder der darauf angeordneten Geräte und/oder Gegenstände nicht ausschließlich über die Kragarme in die Rückenlehne übertragen. Die vorzugsweise hängende Anordnung der Tischplatte an dem Haltearm, vorzugsweise sind zwei Haltearme vorgesehen, trägt wesentlich zur Stabilität und Belastbarkeit des Klapptisches bei. Es sind insbesondere zwei Haltearme vorgesehen, wobei jeder Haltearm mit einem Kragarm einerseits und einer Führungsschiene andererseits verbunden ist.

Nach einem weiteren Merkmal der Erfindung ist vorgesehen, dass der Kragarm eine Ausnehmung aufweist, die der Aufnahme des mit dem Kragarm gelenkig verbundenen Schenkels des Haltearms im ausgeklappten Zustand der Tischplatte dient. Durch diese Ausgestaltung wird der Haltearm im ausgeklappten Zustand der Tischplatte derart angeordnet, dass ein möglichst ungehinderter seitlicher Zugang zur Tischplatte möglich ist.

Soweit die Rückenlehne des Sitzes in unterschiedlichen Stellungen bezogen auf die Lotrechte einstellbar ist hat es sich als vorteilhaft erwiesen, eine Position der Tischplatte in Abhängigkeit einer Ausrichtung der Führungsschienen relativ zur Lotrechten über einen Verfahrweg der Kragarme in den Führungsschienen einstellbar auszubilden. Hierdurch kann der Klapptisch zum einen an die Stellung der Rückenlehne und zum anderen beipielsweise auch an die Körpergröße des Nutzer eingestellt werden, so dass der Nutzer den Klapptisch bzw. die darin angeordneten in für Bedürnisse ergonomischer Anordnung nutzen kann. Hierbei kann auch im Vordergrund stehen, dass die Oberfläche des Klapptisches im Wesentlichen horizontal ausgerichtet ist. Die Position der Tischplatte kann insbesondere elektromotorisch in unmittelbarer Positionsveränderung der Rückenlehne einstellbar sein. Desweiteren kann eine individuelle Einstellung durch den Nutzer erfolgen, die unabhängig von einer Verstellung der Rückenlehne ist.

Vorzugsweise ist die Tischplatte elektromotorisch entlang der Führungsschienen verfahrbar, wobei insbesondere eine im Wesentlichen gleichbleibende Verfahrgeschwindigkeit eingestellt ist. Die Ausgestaltung ermöglicht eine sehr gleichmässige Bewegung der Tischplatte und ist konstruktiv einfach in elektrische Anlage eines Fahrzeugs integrierbar. Es besteht aber auch die Möglichkeit, dass der Bewegung der Tischplatte hydraulisch oder pneumatisch, insbesondere elektrohydraulisch oder elektropneumatisch ausgeführt ist. In gleicher Weise können auch die Plattenelemente bewegt werden. Eine Kopplung der bewegbaren Elemente über eine gemeinsam Steuerung ist möglich, um bestimmte Bewegungsabläufe automatisiert auszuführen und auch diesbezüglich eine gleichmässige Bewegungsgeschwindigkeit einzustellen. Es besteht dann die Möglichkeit, sämtliche Bewegungen über einen Schalter einzuleiten. Es kann dann auch vorgesehen sein, dass beispielsweise beim Öffnen einer Fahrzeugtür im Breeich des Klapptisches der Klapptisch in die eingeklappte Stellung überführt wird. Um hier eine Wartezeit zwischen der eingefahrenen Stellung des Klapptisches und der Möglichkeit der Türöffnung zu vermeiden, kann im Bereich eines Türöffners ein Sensor vorgesehen sein, der die Überführung des Klapptisches in die eingeklappte Stellung bereits zeitlich deutlich vor der Öffnung der Tür einleitet. Diese Ausgestaltung dient auch dem verbesserten Komfort der Nutzung des Fahrzeugs mit dem Klapptisch.

Der Sensor kann optoelektronsich ausgebildet sein.

Desweiteren können die Führungsschienen, Kragarme und Haltearme aus Metall, insbesondere Leichtmetall ausgebildet sein. Für die Tischplatte hat sich als besonders geeignet Holz als Material erwiesen, wobei insbesondere ein Edelholz vorgesehen ist, welches eine besonders hochwertige Ausgestaltung vermittelt. Es kann aber auch ein Kunststoffelement Verwendung finden, welches mit einem Edelholzfurnier beschichtet sein kann. Diese Materialien erfüllen die Anforderungen an eine große Stabilität verbunden mit einer Ausgestaltung geringen Gewichts, so dass eine solche Ausgestaltung insbesondere im Fahrzeugbau einsetzbar ist und gleichzeitig die notwendigen Motorkräfte zu Bewegung des Klapptisches bzw. der Plattenelemente der Tischplatte reduziert.

Als Führungsschienen haben sich insbesondere Profilelemente mit u-förmigem Querschnitt als geeignet erwiesen. Diese Profilelemente weisen eine ausreichende Stabilität aus und sind zur Führung beispielsweise eines Zapfens mit einer daran drehbar gelagert rotationssymettrischen Körper geeignet. Es besteht aber auch die Möglichkeit in einem derartigen Profilelement einen Gleitstein zu führen.

Nach einem weiteren Merkmal der Erfindung ist vorgesehen, dass die elektromotorischen Antriebe der Tischplatte und der Plattenelemente über eine Steuerung miteinander verbunden sind, die eine gleichzeitige Bewegung der Tischplatte und der Plattenelemente ermöglicht, wobei die Bewegungen über einen Schalter auslösbar sind. Hieraus ergibt sich der Vorteil, dass Fehlbedienungen durch fehlerhafter Betätigung mehrerer Schalter vermieden werden. Vorzugsweise wird das Ausklappen des Klapptisches über einen Schalter an der Rückenlehne des Sitzes oder im Bereich des Sitzes des Nutzers initiiert. Das Verschwenken der beiden Plattenelemente kann dann beispielsweise über einen nur im ausgeklappten Zustand des Klapptisches zugänglichen und/oder aktivierbaren Schalter oder über eine zweite Betätigung des das Ausklappen initiierenden Schalters ausgeführt werden. Über eine Logik kann aber auch die gesamte Steuerung der Bewegung über einen Schalter dadurch gesteuert werden, dass über eine unterschiedliche Anzahl von Betätigungen des Schalters in bestimmten Zeitintervallen unterschiedliche Bewegungen aktiviert werden.

Erfindungsgemäß wird ein voranstehend beschriebener Klapptisch im Bereich der Rückenlehne eines Fahrzeugsitzes angeordnet. Bei dieser Ausgestaltung ist es nach einer Weiterbildung vorgesehen, dass die Rückenlehne in der Rückenseite eine Ausnehmung zur Aufnahme des Klapptisches aufweist, wobei der Klapptisch in der Aufnahme derart angeordnet werden kann, dass der Klapptisch oberflächenbündig in der Rückenlehne angeordnet ist. Eine derartige Ausgestaltung verhindert mögliche Verletzungen der hinter dem Fahrzeugsitz sitzenden Person. Darüber hinaus kann sich ein Klapptisch bei dieser Ausgestaltung sehr harmonisch in die Rückseite eines Fahrzeugsitzes einfügen.

Schließlich ist bei einem erfindungsgemäßen Fahrzeugsitz vorgesehen, dass der Klapptisch entlang eines Bewegungsweges bewegbar ist, wobei der Bewegungsweg beginnend in einer ersten Endstellung über einen Teilbereich im Wesentlichen parallel zur Rückenlehne und in einem weiteren Teilbereich bis zu einer zweiten Endstellung um einen Winkel vorzugsweise von 90 Grad relativ zur Rückenlehne verläuft.

Weitere Vorteile und Merkmale der Erfindung ergeben sich aus der nachfolgenden Beschreibung und den dazu gehörigen Zeichnungen. In den Zeichnungen zeigen:
- Figur 1: einen erfindungsgemäßen Klapptisch im Innenraum eines Kraftfahrzeugs;
- Figur 2: den Klapptisch gemäß Figur 1 in einer Detailansicht;
- Figur 3: den Klapptisch im Bereich in der Rückenlehne eines Fahrersitzes in drei verschiedenen Stellungen (Figur 3a bis 3c);
- Figur 4: den Klapptisch in einer detaillierten perspektivischen Ansicht mit einer Verbindungsvorrichtung.

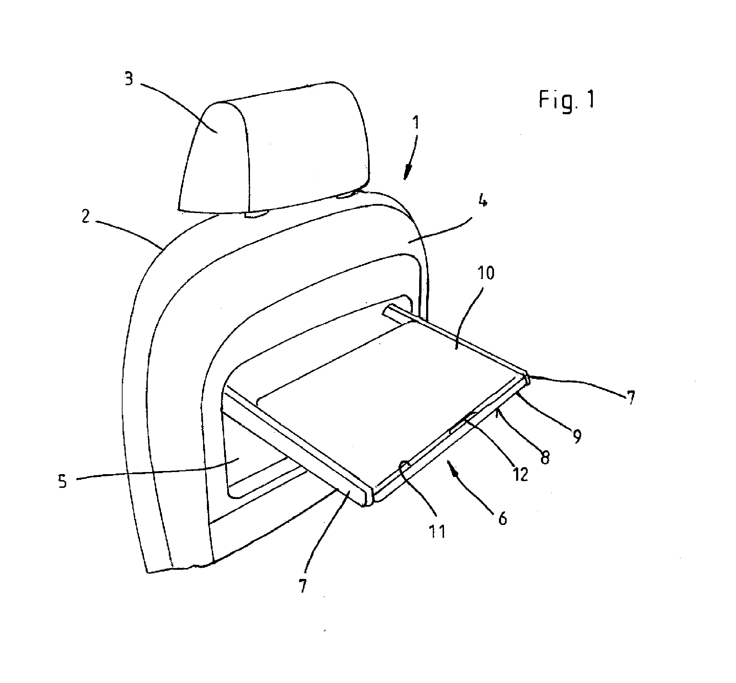

In Figur 1 ist der Innenraum eines Kraftfahrzeugs dargestellt. Zu erkennen ist ein Kraftfahrzeugsitz 1 mit einer Rückenlehne 2, auf der eine Kopfstütze 3 höhenverstellbar angeordnet ist. In einer Rückseite 4 der Rückenlehne 2 ist eine Ausnehmung 5 zur Aufnahme eines Klapptisches 6 angeordnet.

Der Klapptisch 6 weist zwei Kragarme 7 und eine dazwischen angeordnete Tischplatte 8 auf. Die Tischplatte 8 besteht aus einem unteren Plattenelement 9 und einem oberen Plattenelement 10, wobei die beiden Plattenelemente 9, 10 über eine nicht näher dargestellte Schwenkachse relativ zueinander verschwenkbar sind.

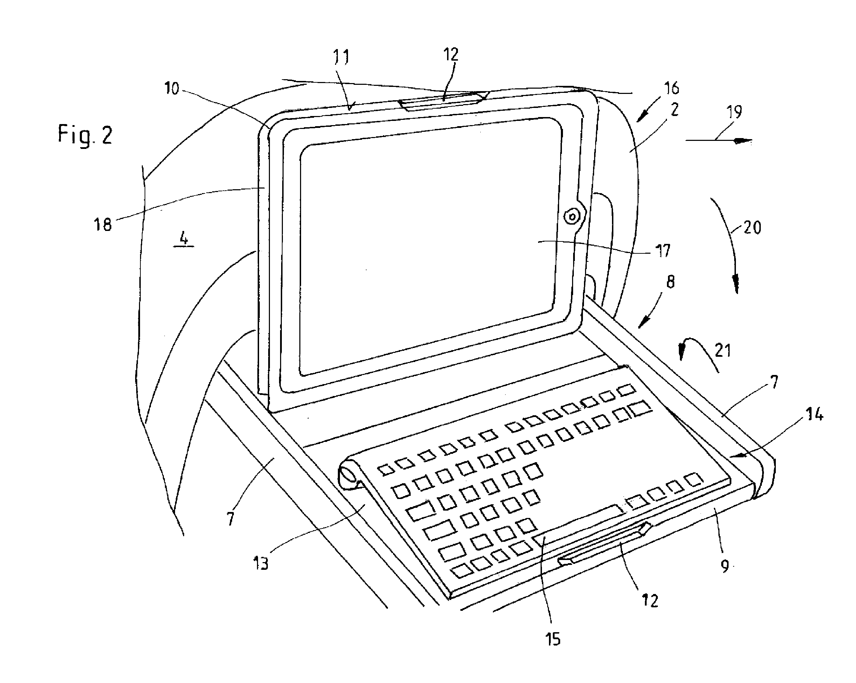

In Figur 2 ist zu erkennen, dass das untere Plattenelement 9 zwischen den Kragarmen 7 festgelegt ist und dass das obere Plattenelement 10 relativ zum unteren Plattenelement 9 verschwenkbar ist, wobei die nicht näher dargestellte Schwenkachse die beiden Kragarme 7 miteinander verbindet und das obere Plattenelement 10 durchgreift.

Die Schwenkachse ist derart ausgebildet, dass die Stellung des oberen Plattenelements 10 relativ zum unteren Plattenelement 9 in unterschiedlichen Positionen fixierbar ist.

Zu diesem Zweck ist ein elektrischer Antrieb vorgesehen. Zwischen den Plattenelementen 9, 10 ist eine Rutschkupplung angeordnet, die eine Feinjustierung der Plattenelemente 9, 10 zueinander per Hand ermöglicht. Über die Rutschkupplung wird ferner ein Klemmschutz ermöglicht. Hierdurch werden Nutzer und Antrieb bei Auftreffen auf ein Hindernis gegen Verletzungen, insbesondere Quetschungen und gegen Beschädigungen geschützt.

Es können Rastelemente in den Kragarmen 7 angeordnet sein, die mit korrespondierenden Rastelementen der nicht näher dargestellten Schwenkachse zusammenwirken.

Derartige Rastelemente können beispielsweise als mit der Schwenkachse unter Zwischenschaltung der Rutschkupplung verbundene Ritzel und in den Kragarmen 7 festgelegte Rastvorsprünge ausgebildet sein, wobei die Rastvorsprünge zur Verrastung zwischen die einzelnen Zähne der Ritzel greifen können.

Vorzugsweise bestehen die Kragarme 7 aus einem Leichtmetall. Geführt werden die Kragarme 7 in nicht näher dargestellten Führungsschienen, die in der Ausnehmung 5 der Rückenlehne 2 des Kraftfahrzeugsitzes 1 angeordnet sind.

Zur einfachen Bedienung der beiden Plattenelemente 9, 10 weist das obere Plattenelement 10 im Bereich seiner rechtwinklig zur Längserstreckung der Kragarme 7 verlaufenden Frontfläche 11 eine Vertiefung 12 auf, die als Fingeransatz dient. Es kann aber auch vorgesehen sein, dass in der Vertiefung 12 ein fotooptisches Schaltelement angeordnet ist, welches bei Aktivierung einen in der Tischplatte 8 angeordneten elektromotorischen Antrieb aktiviert, mit dem das obere Plattenelement 10 relativ zum unteren Plattenelement 9 verschwenkt wird.

Figur 2 zeigt den Klapptisch 6 in geöffneter Stellung. Es ist zu erkennen, dass das untere Plattenelement 9 eine Ausnehmung 13 zur Aufnahme einer Steuerungseinrichtung 14 in Form einer Tastatur 15 aufweist. In dem Plattenelement 10 ist eine Anzeigevorrichtung 16 in Form eines sogenannten Handheld-PCs 17 angeordnet ist. Der PC besteht aus einem nicht näher dargestellten Microcomputer und dem Bildschirm und ist in horizontaler Richtung in eine seitlich offene Ausnehmung 18 des oberen Plattenelements 10 einschiebbar. Der Ausnehmung 18 gegenüberliegend ist das obere Plattenelement 10 geschlossen ausgebildet, wobei auf der Innenseite der diesbezüglichen Seitenfläche des oberen Plattenelements 10 zumindest ein elektrischer Anschluss zur Verbindung des PCs 17 mit einer elektrischen Energieversorgung vorgesehen ist.

Die in dem Plattenelement 10 ausgebildete Ausnehmung 18 ist entsprechend der Außenkontur des PCs 17 ausgebildet, so dass diese lagefixiert in dem oberen Plattenelement 10 gehalten ist.

In Figur 2 sind ergänzend drei Pfeile 19, 20 und 21 dargestellt. Der Pfeil 19 deutet hierbei die Einschubrichtung des PCs 17 in die Ausnehmung 18 des oberen Plattenelements 10 an. Dem gegenüber zeigt der Pfeil 20 die Bewegungsrichtung des oberen Plattenelements 10 relativ zum unteren Plattenelement 9 an. Schließlich zeigt der Pfeil 21 die Bewegungsrichtung der Tischplatte 8 mit den Kragarmen 7 relativ zum Kraftfahrzeugsitz 1 an, soweit dieser aus der in Figur 2 dargestellten Position in die eingeklappte Endstellung überführt werden soll.

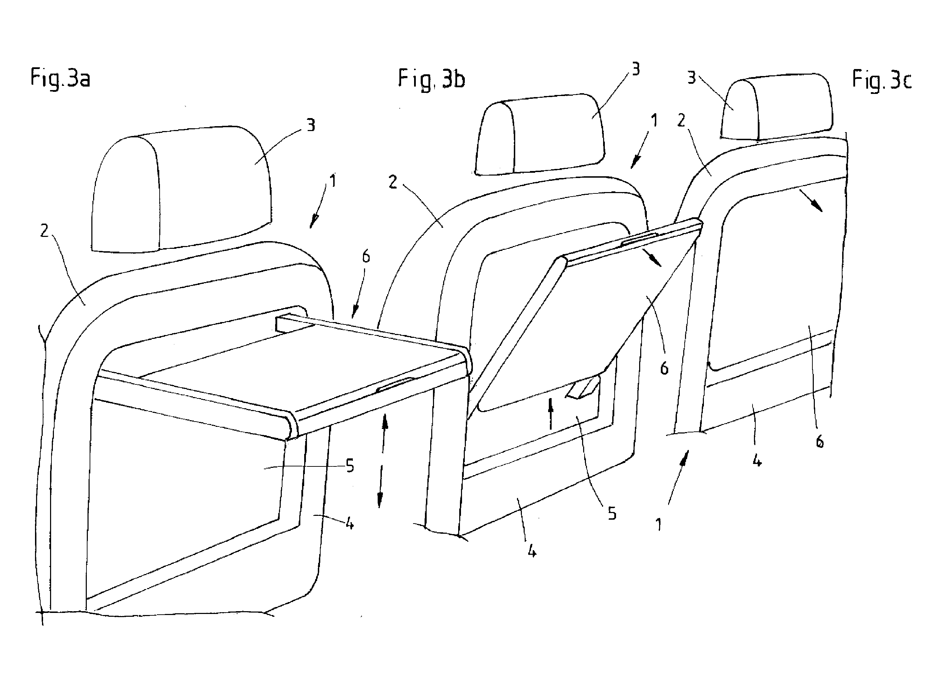

Unterschiedliche Stellungen sind in den Figuren 3a bis 3c dargestellt. Hierbei zeigen Figur 3a die ausgefahrene Endstellung des Klapptisches 6, die Figur 3b eine Zwischenstellung des Klapptisches 6 und die Figur 3c die eingefahrene Endstellung des Klapptisches 6 innerhalb der Ausnehmung 5 in der Rückenlehne 2 des Kraftfahrzeugsitzes 1.

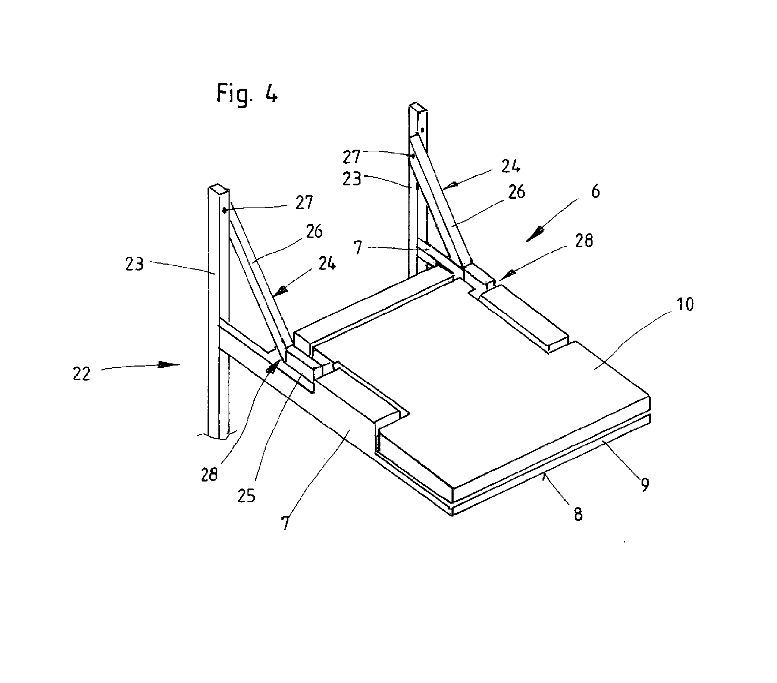

Figur 4 zeigt einen Klapptisch 6 in perspektivischer Ansicht in Verbindung mit einer Verbindungsvorrichtung 1, die dazu dient, den Klapptisch 6 beispielsweise mit der Rückenlehne eines Sitzes zu verbinden, wobei die Verbindungsvorrichtung 1 teilweise integraler Bestandteil beispielsweise der Rückenlehne des Sitzes sein kann. Die Verbindungsvorrichtung 22 besteht aus zwei parallel zueinander angeordneten Führungsschienen 23, die im Querschnitt u-förmig profiliert ausgebildet sind, wobei zwischen zwei Schenkeln der Führungsschienen 23 jeweils einer der Kragarme 7 des Klapptisches 6 derart geführt ist, dass eine im wesentlichen gleichmäßige Bewegung der freien Enden der Kragarme 7 entlang der Führungsschienen 23 möglich ist. Zum Antrieb können hier sowohl elektrische, wie auch pneumatische oder hydraulische Antriebsvorrichtungen vorgesehen sein, die in Figur 4 nicht näher dargestellt sind. Es können beispielsweise auch rotatorisch angetriebene Spindeln in den Führungsschienen 23 angeordnet sein, die mit in den Kragarmen angeordneten Muttern korrespondierend zusammenwirken, so dass beim Antrieb der Spindeln die Kragarme 7 entlang der Führungsschienen 23 bewegbar sind.

Desweiteren weist die Verbindungsvorrichtung 22 zwei Haltearme 24 auf, die jeweils mit einem innenliegenden Schenkel der Führungsschienen 23 schwenkbeweglich verbunden sind, wobei die Haltearme 24 mit ihren zweiten Enden schwenkbeweglich mit den Kragarmen 7 verbunden sind. Durch diese Ausgestaltung wird bei einer Bewegung der Kragarme 27 entlang der Führungsschienen 23 eine Klappbewegung des Klapptisches 6 um die Anlenkpunkte 25 der Haltearme 24 an den Kragarmen 7 ausgeführt. Derart ausgestaltet kann über die Bewegung der Kragarme 7 innerhalb der Führungsschienen 23 ein Einklappen des Klapptisches 6 in die Ausnehmung 5 (Fig. 1) beziehungsweise aus der Ausnehmung 5 heraus ausgeführt werden. In Figur 4 ist die ausgeklappte Stellung des Klapptisches 6 dargestellt.

Die Haltearme 24 sind im Wesentlichen L-förmig ausgebildet und weisen zwei Schenkel 26 auf, die mit ihren freien Enden an Zapfen 27 an den Führungsschienen 23 befestigt. Die Anlenkpunkte 25 sind ebenfalls als Zapfen ausgebildet, mit denen die Haltearme 24 an den Kragarmen 7 schwenkbeweglich angeschlossen sind.

Um eine möglichst gleichmäßige Oberfläche der Tischplatte 10 zu erzielen, weisen die Kragarme 7 jeweils eine Ausnehmung 28 auf, die der Aufnahme des mit dem jeweiligen Kragarm 7 gelenkig verbundenen Schenkels des Haltearms 24 im ausgeklappten Zustand der Tischplatte 8 dient.

Die voranstehend beschriebene Erfindung ist nicht auf das Ausführungsbeispiel beschränkt. Neben der Anordnung eines Tablet-PCs 17 ist auch eine Ausführung erfasst, die lediglich einen Bildschirm aufweist, der in die Ausnehmung 18 des Plattenelements 10 integriert und mit einem PC verbunden ist, der nicht zwingend im Bereich des Klapptisches angeordnet sein muss.

### Bezugszeichen:

- 1: Kraftfahrzeugsitz
- 2: Rückenlehne
- 3: Kopfstütze
- 4: Rückseite
- 5: Ausnehmung
- 6: Klapptisch
- 7: Kragarm
- 8: Tischplatte
- 9: Plattenelement
- 10: Plattenelement
- 11: Frontfläche
- 12: Vertiefung
- 13: Ausnehmung
- 14: Steuerungseinrichtung
- 15: Tastatur
- 16: Anzeigevorrichtung
- 17: PC
- 18: Ausnehmung
- 19: Pfeil
- 20: Pfeil
- 21: Pfeil
- 22: Verbindungsvorrichtung
- 23: Führungsschiene
- 24: Haltearm
- 25: Anlenkpunkt
- 26: Schenkel
- 27: Zapfen
- 28: Ausnehmung

## Patentansprüche

1. Klapptisch zur verstellbaren Anordnung in einem Fahrzeug, insbesondere an einer Rückenlehne eines Fahrzeugsitzes, mit einer, eine Oberfläche aufweisende Tischplatte, die zwischen zwei Endstellungen verstellbar ist, wobei die Tischplatte in einer ersten Endstellung derart angeordnet ist, dass die Tischplatte bestimmungsgemäß, beispielsweise zur Aufnahme von Gegenständen nutzbar ist, **dadurch gekennzeichnet,**
**dass** die Tischplatte (8) in einer Ebene im Wesentlichen parallel zur Oberfläche zumindest über einen Teilbereich in zwei relativ zueinander um eine Schwenkachse bewegbare Plattenelemente (9, 10) unterteilt ist, wobei die Plattenelemente (9, 10) Aufnahmen für eine Steuerungseinrichtung (14) einerseits und eine mit der Steuerungseinrichtung (14) in Kommunikationsverbindung bringbare Anzeigevorrichtung (16) andererseits aufweisen.

2. Klapptisch nach Anspruch 1, **dadurch gekennzeichnet, dass** die Tischplatte (8) elektromotorisch zwischen den beiden Endstellungen verstellbar ist.

3. Klapptisch nach Anspruch 1 oder 2, **dadurch gekennzeichnet, dass** die beiden Plattenelemente (9, 10) elektromotorisch zueinander bewegbar sind.

4. Klapptisch nach Anspruch 2 und 3, **dadurch gekennzeichnet, dass** die Bewegung der Tischplatte (8) zwischen den beiden Endstellungen und der beiden Plattenelemente (9, 10) relativ zueinander abhängig voneinander ausführbar sind.

5. Klapptisch nach einem der Ansprüche 1 bis 4, **dadurch gekennzeichnet, dass** die Anzeigevorrichtung (16) als Bildschirm, insbesondere mit integriertem Microcomputer ausgebildet ist.

6. Klapptisch nach einem der Ansprüche 1 bis 5, **dadurch gekennzeichnet, dass** die Steuerungseinrichtung (14) als Tastatur (15) ausgebildet ist.

7. Klapptisch nach einem der Ansprüche 1 bis 6, **dadurch gekennzeichnet, dass** das Plattenelement (10) zur Aufnahme der Anzeigevorrichtung (16) eine Ausnehmung (18) aufweist, in die die Anzeigevorrichtung (16) lagefixiert einsetzbar ist.

8. Klapptisch nach Anspruch 7, **dadurch gekennzeichnet, dass** die Ausnehmung (18) elektrische Anschlüsse zur Versorgung der Anzeigevorrichtung (16) mit elektrischer Energie und/oder Daten aufweist.

9. Klapptisch nach einem der Ansprüche 1 bis 8, **dadurch gekennzeichnet, dass** die Kommunikationsverbindung zwischen der Steuerungseinrichtung (14) und der Anzeigevorrichtung (16) drahtlos ausgebildet ist.

10. Klapptisch nach einem der Ansprüche 1 bis 9, **dadurch gekennzeichnet, dass** die Tischplatte (8) mit zwei Kragarmen (7) ausgebildet ist, die entlang von zwei Führungsschienen zwischen den Endstellungen verfahrbar sind.

11. Klapptisch nach einem der Ansprüche 1 bis 10, **dadurch gekennzeichnet, dass** die Tischplatte (8) mit einer Verbindungsvorrichtung (22) zur Verbindung mit einer Rückenlehnen (2) eines Sitzes (1) ausgebildet ist, die aus zwei beidseitig der Tischplatte (8) angeordneten und mit der Tischplatte (8) verbundenen, jeweils in einer Führungsschiene (23) geführten und entlang der Führungsschienen (23) verfahrbaren Kragarmen (7) besteht, wobei die Verbindungsvorrichtung zumindest einen Haltearm (24) aufweist, der schwenkbeweglich an einer Führungsschiene (23) und einem Kragarm (7) angelenkt sind.

12. Klapptisch nach Anspruch 11, **dadurch gekennzeichnet, dass** der Haltearm (24) im Wesentlichen L-förmig ausgebildet ist und zwei Schenkel (26) aufweist, die mit ihren freien Enden an Zapfen (27) an der Führungsschiene (23) und am Kragarm (7) angeschlossen sind.

13. Klapptisch nach Anspruch 11 oder 12, **dadurch gekennzeichnet, dass** der Kragarm (7) eine Ausnehmung (28) aufweist, die der Aufnahme des mit dem Kragarm (7) gelenkig verbundenen Schenkels des Haltearms (24) im ausgeklappten Zustand der Tischplatte (8) dient.

14. Klapptisch nach einem der Ansprüche 10 bis 13, **dadurch gekennzeichnet, dass** eine Position der Tischplatte (8) in Abhängigkeit einer Ausrichtung der Führungsschienen (23) relativ zur Lotrechten über einen Verfahrweg der Kragarme (7) in den Führungsschienen (23) einstellbar ist.

15. Klapptisch nach einem der Ansprüche 2 bis 14, **dadurch gekennzeichnet, dass** die Tischplatte (8) elektromotorisch entlang der Führungsschienen (23) verfahrbar ist, wobei insbesondere eine im Wesentlichen gleichbleibende Verfahrgeschwindigkeit eingestellt ist.

16. Klapptisch nach einem der Ansprüche 2 bis 15, **dadurch gekennzeichnet, dass** die elektromotorischen Antriebe der Tischplatte (8) und der Plattenelemente (9, 10) über eine Steuerung miteinander verbunden sind, die eine gleichzeitige Bewegung der Tischplatte (8) und der Plattenelemente (9, 10) ermöglicht, wobei die Bewegungen über einen Schalter auslösbar sind.

17. Klapptisch nach einem der Ansprüche 1 bis 16, **dadurch gekennzeichnet, dass** die relativen Positionen der Plattenelemente (9, 10) zueinander und/oder Tischplatte (8) zwischen den Endstellungen individuell in einem Speicherelement speicherbar sind.

18. Klapptisch nach Anspruch 10, **dadurch gekennzeichnet, dass** die Tischplatte (8) relativ zu den Kragarmen (7) bewegbar ist.

19. Fahrzeugsitz mit einer Rückenlehne (2), die eine Rückseite (4) aufweist, **dadurch gekennzeichnet, dass** an der Rückseite (4) ein Klapptisch (6) nach einem der Ansprüche 1 bis 18 befestigt ist.

20. Fahrzeugsitz nach Anspruch 19, **dadurch gekennzeichnet, dass** die Rückenlehne (2) in der Rückseite (4) eine Ausnehmung (5) zur Aufnahme des Klapptisches (6) aufweist, wobei der Klapptisch (6) in der Aufnahme (5) derart angeordnet werden kann, dass der Klapptisch (6) oberflächenbündig in der Rückenlehne (2) angeordnet ist.

21. Fahrzeugsitz nach Anspruch 19 oder 20, **dadurch gekennzeichnet, dass** der Klapptisch (6) entlang eines Bewegungsweges bewegbar ist, wobei der Bewegungsweg beginnend in einer ersten Endstellung über einen Teilbereich im Wesentlichen parallel zur Rückenlehne (2) und in einem weiteren Teilbereich bis zu einer zweiten Endstellung um einen Winkel, vorzugsweise von 90 Grad relativ zur Rückenlehne (2) verläuft.
